(19) Europäisches Patentamt
European Patent Office
Office européen des brevets

(11) **EP 2 345 338 A1**

(12) **EUROPÄISCHE PATENTANMELDUNG**

(43) Veröffentlichungstag:
**20.07.2011 Patentblatt 2011/29**

(51) Int Cl.:
***A24C 5/28*** *(2006.01)* ***G01N 3/00*** *(2006.01)*

(21) Anmeldenummer: **10016080.3**

(22) Anmeldetag: **24.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.01.2010 DE 102010004934**

(71) Anmelder: **Hauni Maschinenbau Aktiengesellschaft**
**21033 Hamburg (DE)**

(72) Erfinder:
• **Breitling, Henryk**
**21035 Hamburg (DE)**

• **Prien, Michael**
**21031 hamburg (DE)**
• **Eckroth, Andreas**
**21516 Müssen (DE)**
• **Stoffels, Sven**
**21465 Reinbek (DE)**
• **Homann, Stefan**
**21029 Hamburg (DE)**

(74) Vertreter: **Müller Verweyen**
**Patentanwälte**
**Friesenweg 1**
**22763 Hamburg (DE)**

(54) **Einrichtung zur Überwachung einer in einer Maschine zur Herstellung von Tabakprodukten einseitig fest eingespannten Blattfeder**

(57) Die Erfindung betrifft eine Einrichtung zur Überwachung einer in einer Maschine zur Herstellung von Tabakprodukten einseitig fest eingespannten Blattfeder (1), mit einem an einem maschinenfesten Gegenlager (2) fest eingespannten ersten Ende (3) und einem eine Bewegung ausführenden zweiten Ende (4), wobei zwischen dem Gegenlager (2) und dem fest eingespannten ersten Ende (3) der Blattfeder (1) und/oder zwischen dem zweiten Ende (4) und einem die Bewegung mit ausführenden Teil der Maschine ein Kraft- und/oder Drehmomentsensor (7,17) vorgesehen ist.

Fig. 1

EP 2 345 338 A1

**Beschreibung**

Die Erfindung betrifft eine Einrichtung zur Überwachung einer in einer Maschine zur Herstellung von Tabakprodukten einseitig fest eingespannten Blattfeder mit den Merkmalen des Oberbegriffs von Anspruch 1.

In Maschinen zur Herstellung von Tabakprodukten werden einseitig eingespannte Blattfedern dazu verwendet, das Schwingverhalten oder das Bewegungsverhalten von bestimmten Teilen gezielt einzustellen. Solche Teile sind z.B. die Tube zur Führung des strangförmig zugeführten Produktes im Bereich der Schneidevorrichtung oder das Schüttelsieb zur Vergleichmäßigung des Tabaks. Die Blattfedern sind mit einem ersten Ende an einem maschinenfesten Gegenlager fest eingespannt und mit einem zweiten Ende mit dem die Bewegung ausführenden Teil verbunden. Während des Betriebes der Maschine werden die Blattfedern einer Bewegung mit einer hohen Frequenz ausgesetzt und müssen als Verschleißteile nach einer bestimmten Betriebsdauer ausgetauscht werden. Unter Tabakprodukten im Sinne der Erfindung werden z.B. Zigaretten, Zigarillos oder ähnliche stabförmige Produkte aus Tabak oder deren Filter verstanden.

Ein vorzeitiger Bruch der Blattfeder, wie z.B. durch Alterung, inneren Verschleiß oder dergleichen, kann dazu führen, dass die Maschine vorzeitig angehalten werden muss, und während des Betriebes mit der defekten Blattfeder Folgeschäden entstehen können bzw. das hergestellte Produkt während dieser Zeit nicht dem gewünschten Qualitätsstandard entspricht.

Zur Vermeidung dieses Problems ist es aus der DE 42 13 884 A1 bereits bekannt, den Zustand der Blattfeder mittels eines die Blattfeder durchfließenden Messstromes zu überwachen und dadurch eine Beschädigung der Blattfeder möglichst frühzeitig zu erkennen. Für den Fall, dass die Blattfeder z.B. aus einem Faserverbundwerkstoff wie CFK oder GFK hergestellt ist, müssen besondere Maßnahmen getroffen werden, damit der Faserverbundwerkstoff elektrisch leitend ist, was z.B. durch elektrisch leitende Verstärkungselemente wie Kohlefasern erreicht werden kann. Die Blattfeder selbst wird dadurch teurer. Ein weiterer Nachteil dieser Lösung ist darin zu sehen, dass die Blattfeder selbst bestimmte Eigenschaften aufweisen muss, da sie ein Teil der Überwachungseinrichtung ist, so dass diese Lösung grundsätzlich nicht auf alle Arten von Blattfedern angewendet werden kann. Ferner ist es möglich, dass das gewünschte Schwingverhalten der Blattfeder und die elektrische Leitfähigkeit nicht ohne Nachteile für die jeweils andere Funktion realisiert werden können, so dass die Blattfeder wenigstens eine der Funktionen nicht optimal erfüllt. Außerdem besteht die Gefahr, dass, sofern die Blattfeder nicht vollständig elektrisch leitend ausgebildet ist, Teilbereiche, die nicht elektrisch leitend sind, beschädigt werden können, ohne dass dies zu einem Signal führt.

Aufgabe der Erfindung ist es, eine kostengünstige und einfach zu realisierende Einrichtung zu schaffen, mit der die Funktionsfähigkeit einer gattungsgemäßen einseitig eingespannten Blattfeder möglichst zuverlässig überwacht werden kann.

Zur Lösung der Aufgabe schlägt die Erfindung vor, dass zwischen dem Gegenlager und dem eingespannten ersten Ende der Blattfeder und/oder zwischen dem zweiten Ende und einem die Bewegung mit ausführenden Teil der Maschine ein Kraft-und/oder Drehmomentsensor vorgesehen ist. Die erfindungsgemäße Lösung weist den Vorteil auf, dass die Blattfeder im Gegensatz zum Stand der Technik für die Überwachungsfunktion selbst nicht verändert werden muss. Die vorgeschlagene Einrichtung ist damit für alle beliebigen Blattfedern verwendbar, wobei insbesondere das Bewegungsverhalten der Blattfeder dadurch nicht verändert wird. Außerdem wird durch die vorgeschlagene Lösung die Kraft und/oder das Drehmoment an der Einspannstelle der Blattfeder an dem Gegenlager gemessen, welche unmittelbar aus der von der Blattfeder ausgeführten Bewegung resultiert, so dass durch die vorgeschlagene Einrichtung eine direkte Überwachung des Federverhaltens der Blattfeder möglich ist. Der konstruktive Aufwand der erfindungsgemäßen Lösung ist sehr gering, da lediglich an der Einspannstelle der Blattfeder oder zwischen dem zweiten Ende und dem bewegten Teil der Maschine ein Kraft- bzw. Drehmomentsensor angeordnet werden muss; darüber hinaus gehende konstruktive Veränderungen der Maschine sind nicht erforderlich.

Weiter wird vorgeschlagen, dass der Kraftsensor derart angeordnet ist, dass er die quer zu der Blattfeder wirkende Kraft sensiert. Da die Federbewegung der Blattfeder ebenfalls quer zu deren Längserstreckung ausgerichtet ist, ist die Kraft an dem Gegenlager bzw. an dem bewegten Ende quer zu der Blattfeder am größten, so dass die Sensierung der Kraft in dieser Richtung bei einer Veränderung des Federverhaltens der Blattfeder das größte Messsignal liefert.

Ferner wird vorgeschlagen, dass die Blattfeder über eine Anlagefläche mittelbar oder unmittelbar an dem Kraftsensor anliegt. Die Anlagefläche dient einerseits einer gleichmäßigen Krafteinleitung in den Kraftsensor und andererseits zu einer stabilen Unterstützung der Blattfeder an der Einspannstelle bzw. an dem bewegten Ende.

Zur Vereinfachung der Montage und der Konstruktion insgesamt kann der Kraftsensor eine Aufnahme aufweisen, in der das erste Ende der Blattfeder verschiebefest aufgenommen ist. Die Aufnahme kann als integraler Bestandteil des Kraftsensors selbst oder auch durch ein separat montiertes Teil ausgebildet sein; wichtig ist nur, dass zwischen der Aufnahme und dem Kraftsensor keine weitere bewegliche Verbindung vorgesehen ist. Die Aufnahme wird dann zusammen mit dem Kraftsensor an der Maschine montiert und dient neben der Schaffung einer kontrollierten Krafteinleitung in den Kraftsensor dazu, die Blattfeder an der Einspannstelle maschinenfest zu fixieren.

Sofern zur Überwachung der Blattfeder ein Drehmomentsensor vorgesehen ist, sollte der Drehmomentsensor eine Aufnahme aufweisen, in der das erste Ende oder das zweite Ende der Blattfeder mittelbar oder unmittelbar drehfest aufgenommen ist.

Eine weitere bevorzugte Ausgestaltung der Erfindung kann dadurch verwirklicht sein, indem zwei oder mehr einseitig eingespannte Blattfedern vorgesehen sind, und der Kraft- und/oder Drehmomentsensor zwischen den ersten fest eingespannten Enden der Blattfedern angeordnet ist. Damit können durch einen Kraft- und/oder Drehmomentsensor zwei Blattfedern gleichzeitig überwacht werden. Die Überwachung basiert in diesem Fall auf einer Messung der Kraftdifferenz und/oder der Drehmomentdifferenz, welche bei funktionsfähigen Blattfedern und gleicher Auslenkung nahe Null oder zumindest unterhalb eines vorbestimmten Niveaus liegen sollte. Für den Fall, dass an einer der Blattfedern ein Schaden auftritt, führt dies zu einer ungleichen Veränderung der Biegesteifigkeiten der Blattfedern und damit zu einer ungleichen Veränderung der ausgeübten Kräfte und/oder Drehmomente. Da die Wahrscheinlichkeit eines gleichzeitigen Schadensfalls mit einer identischen Änderung der Biegesteifigkeiten beider Blattfedern sehr gering ist, kann auch durch die vorgeschlagene Differenzmessung ein zuverlässiges Schadenssignal erzeugt werden.

Nachfolgend wird die Erfindung anhand mehrerer bevorzugter Ausführungsbeispiele näher erläutert. In den Figuren sind im Einzelnen zu erkennen:

Fig.1: Maschine zur Herstellung von Tabakprodukten mit einer einseitig eingespannten Blattfeder und einem Kraftsensor;

Fig.2: Vergrößerter Ausschnitt einer einseitig eingespannten Blattfeder mit einem Drehmomentsensor;

Fig.3: Zwei einseitig eingespannte Blattfedern mit einem zwischen den Enden der Blattfedern angeordneten Kraftsensor.

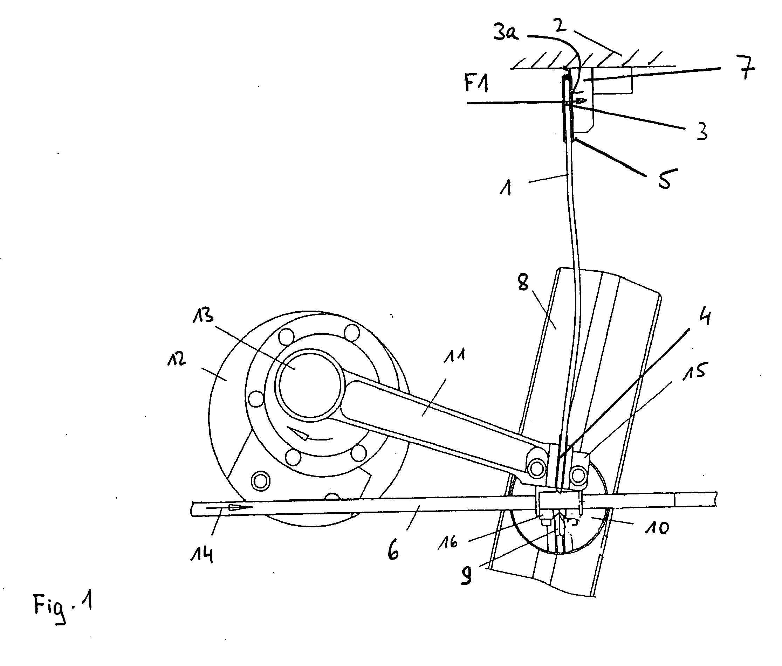

In der Fig.1 ist ein Ausschnitt aus einer Maschine zur Herstellung von Tabakprodukten wie z.B. Zigaretten zu erkennen. In dem Ausschnitt ist eine Schneidevorrichtung der Maschine dargestellt, in der von einem in Vorschubrichtung 14 zugeführten Strang 6 Zigaretten einer vorbestimmten Länge abgeschnitten werden. Die Schneidevorrichtung umfasst einen rotierenden Messerträger 8 mit einer darin kardanisch aufgehängten Messeraufnahme 10, in der ein Messer 9 fest eingespannt ist. Ferner ist eine rotierende Antriebseinrichtung 12 mit einem exzentrischen Drehlager 13 vorgesehen, auf dem eine Pleuelstange 11 drehbar gelagert ist. Bei einer Rotation der Antriebseinrichtung 12 wird die Pleuelstange 11 durch die Lagerung auf dem exzentrischen Drehlager 13 zu einer sich wiederholenden Pendelhubbewegung angetrieben. Außerdem ist eine Blattfeder 1 vorgesehen, welche mit einem ersten Ende 3 an einem maschinenfesten Gegenlager 2 festgelegt ist, und mit dem zweiten Ende 4 mit einem Ende 15 der Pleuelstange 11 verbunden ist. Die Pleuelstange 11 ist mit ihrem Ende 15 mit einer Tube 16 verbunden, in der der Strang geführt ist. Die Tube 16 führt durch die Verbindung mit der die Pendelhubbewegung ausführenden Pleuelstange 11 eine erzwungene Schwingbewegung aus und dient als Gegenlager für das Messer 9 während des Schnittvorganges.

Die Blattfeder 1 wird bei einer Rotation der Antriebseinrichtung 12 aufgrund der Pendelhubbewegung der Pleuelstange 11 ebenfalls zu einer Schwingbewegung angeregt. Der Aufbau der Maschine ist insoweit identisch mit dem Aufbau der in der DE 42 13 884 A1 beschriebenen Einrichtung, welche damit zu dem Offenbarungsgehalt dieser Anmeldung ausdrücklich hinzuzurechnen ist.

Zur Überwachung der Blattfeder 1 ist zwischen dem Gegenlager 2 und dem ersten Ende 3 der Blattfeder 1 ein Kraftsensor 7 vorgesehen. An dem Kraftsensor 7 ist eine Aufnahme 5 in Form eines Klemmstückes angeordnet, in welcher das erste Ende 3 verschiebefest an dem Kraftsensor 7 und damit auch an dem Gegenlager 2 fest eingespannt ist. Bei einer Schwingbewegung der Blattfeder 1 wird die dabei wirkende Kraft F1 über eine Anlagefläche 3a auf den Kraftsensor 7 übertragen, so dass das Messsignal des Kraftsensors 7 einen unmittelbaren Rückschluss auf die Federkraft bzw. die Biegesteifigkeit der Blattfeder 1 ermöglicht. Unterschreitet die so gemessene Kraft F1 der Blattfeder 1 einen vorbestimmten Grenzwert, wird automatisch ein Warnsignal ausgelöst, so dass die Maschine angehalten werden kann, bevor es zu einem Schaden mit schwerwiegenderen Folgen kommen kann. Als Kraftsensoren 7 kommen z.B. Sensoren der Firma "HBM" mit der Bezeichnung U3 oder U93 in Betracht, mit denen eine Messung der Kraft F1 im Bereich von 200N - 50kN möglich ist. Die im Bereich des Kraftsensors 7 wirkende Kraft F1 ergibt sich näherungsweise aus folgendem physikalischen Zusammenhang:

$$F1 \sim (3\ EI/\ L^3)\ x\ w.$$

Dabei sind:

EI: Biegesteifigkeit der Blattfeder 1;
L : frei schwingende Länge der Blattfeder 1;
W : Querauslenkung der Blattfeder 1.

Selbstverständlich kann die Blattfeder 1 auch mit einer Federvorspannung eingespannt sein, welche dann in der Messung durch einen Offset berücksichtigt werden kann.

Damit kann bei einer konstanten Länge L und einer gleichbleibenden Querauslenkung W der Blattfeder 1 bei einer Veränderung der Kraft F1 direkt auf eine Veränderung der Biegesteifigkeit EI der Blattfeder 1 geschlossen werden. Eine Schädigung der Blattfeder 1 führt dabei unmittelbar zu einer Verringerung der Biegesteifigkeit EI und damit auch zu einer Verringerung der Kraft F1.

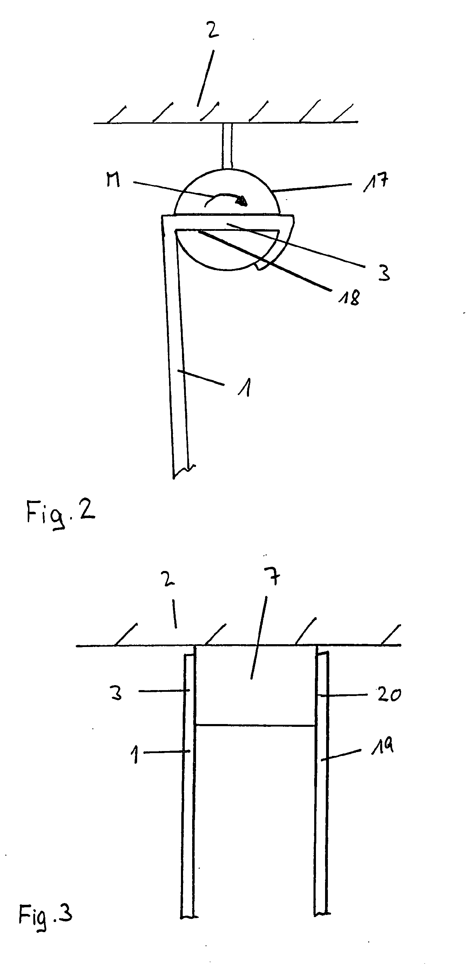

In der Fig.2 ist eine alternative Einspannung des ersten Endes 3 der Blattfeder 1 an dem Gegenlager 2 dargestellt. In diesem Ausführungsbeispiel ist an dem Gegenlager 2 ein Drehmomentsensor 17 in Form eines Torsionselementes vorgesehen, in dem das erste Ende 3 der Blattfeder 1 in einer Aufnahme in Form eines Schlitzes 18 drehfest festgelegt ist. Bei einer Auslenkung der Blattfeder 1 wird auf den Drehmomentsensor 17 näherungsweise ein Drehmoment M nach folgender Gesetzmäßigkeit ausgeübt:

$$M \sim (2\ EI/L^2)\ x\ w$$

Die Symbole entsprechen den Kenngrößen aus der Kraftmessung. Auch hier ergibt sich ein direkter Zusammenhang zwischen der Veränderung des Drehmomentes M und der Biegesteifigkeit EI bei einer konstanten Länge L und Querauslenkung W.

Alternativ kann der Kraftsensor 7 auch zwischen dem zweiten Ende 4 und dem Ende 15 der Pleuelstange 11 angeordnet sein, welche in diesem Fall dem die Bewegung mit ausführenden Teil der Maschine nach Anspruch 1 entspricht.

In der Fig.3 ist ein weiteres bevorzugtes Ausführungsbeispiel der Erfindung zu erkennen, bei dem neben der Blattfeder 1 eine zweite Blattfeder 19 an dem Gegenlager 2 angeordnet ist. Zwischen den Enden 3 und 20 der Blattfedern 1 und 19 ist ein gemeinsamer Kraftsensor 7 angeordnet, welcher die Kraft zwischen den Enden 3 und 20 sensiert. In Kenntnis der Biegesteifigkeiten EI der Blattfedern 1 und 19 zu Beginn der Überwachung kann eine einzuhaltende Soll-Kraftdifferenz vorgegeben werden, bei deren Überschreiten auf eine Veränderung der Biegesteifigkeit EI einer der Blattfedern 1 oder 19 geschlossen werden kann, in Folge dessen dann das Warnsignal ausgelöst wird.

**Patentansprüche**

1. Einrichtung zur Überwachung einer in einer Maschine zur Herstellung von Tabakprodukten einseitig fest eingespannten Blattfeder (1), mit einem an einem maschinenfesten Gegenlager (2) fest eingespannten ersten Ende (3) und einem eine Bewegung ausführenden zweiten Ende (4), **dadurch gekennzeichnet, dass** zwischen dem Gegenlager (2) und dem fest eingespannten ersten Ende (3) der Blattfeder (1) und/oder zwischen dem zweiten Ende (4) und einem die Bewegung mit ausführenden Teil der Maschine ein Kraft-und/oder Drehmomentsensor (7,17) vorgesehen ist.

2. Einrichtung nach Anspruch 1, **dadurch gekennzeichnet, dass** der Kraftsensor (7) derart angeordnet ist, dass er die quer zu der Blattfeder (1) wirkende Kraft (F1) sensiert.

3. Einrichtung nach einem der vorangegangenen Ansprüche, **dadurch gekennzeichnet, dass** die Blattfeder (1) über eine Anlagefläche (3a) mittelbar oder unmittelbar an dem Kraftsensor (7) anliegt.

4. Einrichtung nach einem der vorangegangenen Ansprüche, **dadurch gekennzeichnet, dass** der Kraftsensor (7) eine Aufnahme (5) aufweist, in der das erste Ende (3) der Blattfeder (1) verschiebefest aufgenommen ist.

5. Einrichtung nach Anspruch 1, **dadurch gekennzeichnet, dass** der Drehmomentsensor (17) eine Aufnahme aufweist, in der das erste Ende (3) der Blattfeder (1) mittelbar oder unmittelbar drehfest aufgenommen ist.

6. Einrichtung nach einem der vorangegangenen Ansprüche, **dadurch gekennzeichnet, dass** zwei oder mehr einseitig eingespannte Blattfedern (1,19) vorgesehen sind, und der Kraft-und/oder Drehmomentsensor (7,17) zwischen den ersten fest eingespannten Enden (3,20) der Blattfedern (1,19) angeordnet ist.

Fig. 1

Fig. 2

Fig. 3

EP 2 345 338 A1

**EP 2 345 338 A1**

Europäisches Patentamt
European Patent Office
Office européen des brevets

# EUROPÄISCHER RECHERCHENBERICHT

**Nummer der Anmeldung**

EP 10 01 6080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 42 13 884 A1 (HAUNI WERKE KOERBER & CO KG [DE]) 4. November 1993 (1993-11-04) <br> * das ganze Dokument * <br> ----- | 1-6 | INV. <br> A24C5/28 <br> G01N3/00 |
| A | EP 1 707 063 A1 (GD SPA [IT]) 4. Oktober 2006 (2006-10-04) <br> * das ganze Dokument * <br> ----- | 1-6 | |
| A | EP 1 640 125 A1 (HAUNI MASCHINENBAU AG [DE]) 29. März 2006 (2006-03-29) <br> * Zusammenfassung; Abbildungen * <br> ----- | 1-6 | |
| A | US 2004/261515 A1 (UMEBAYASHI AKIRA [JP]) 30. Dezember 2004 (2004-12-30) <br> * das ganze Dokument * <br> ----- | 1-6 | |

RECHERCHIERTE SACHGEBIETE (IPC)

A24C
G01N

Der vorliegende Recherchenbericht wurde für alle Patentansprüche erstellt

| Recherchenort | Abschlußdatum der Recherche | Prüfer |
|---|---|---|
| München | 3. Mai 2011 | Marzano Monterosso |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

7

**ANHANG ZUM EUROPÄISCHEN RECHERCHENBERICHT**
**ÜBER DIE EUROPÄISCHE PATENTANMELDUNG NR.**                    EP 10 01 6080

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2011

| Im Recherchenbericht angeführtes Patentdokument | | Datum der Veröffentlichung | Mitglied(er) der Patentfamilie | | Datum der Veröffentlichung |
|---|---|---|---|---|---|
| DE 4213884 | A1 | 04-11-1993 | KEINE | | |
| EP 1707063 | A1 | 04-10-2006 | JP | 2006280373 A | 19-10-2006 |
| | | | US | 2006224266 A1 | 05-10-2006 |
| EP 1640125 | A1 | 29-03-2006 | AT | 487571 T | 15-11-2010 |
| | | | CN | 1751610 A | 29-03-2006 |
| | | | DE | 102004047265 A1 | 06-04-2006 |
| | | | EP | 2258522 A1 | 08-12-2010 |
| | | | JP | 2006087432 A | 06-04-2006 |
| | | | US | 2006065278 A1 | 30-03-2006 |
| US 2004261515 | A1 | 30-12-2004 | CN | 1574057 A | 02-02-2005 |
| | | | CN | 101029859 A | 05-09-2007 |
| | | | JP | 4131836 B2 | 13-08-2008 |
| | | | JP | 2004354107 A | 16-12-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4213884 A1